# EUROPEAN PATENT APPLICATION

(11) **EP 2 476 608 A1**
(43) Date of publication of application: **18.07.2012**
(21) Application number: 10813222.6
(22) Date of filing: 15.04.2010
(51) Int. Cl.: B62K 15/00

(54) **FOLDING JOINT DEVICE**

(30) Priority: 07.09.2009 CN 200920204360 U
(71) Applicant: Dahon Technologies Ltd., Industrial Zone Shajing Town, Bao an District, Shenzhen Guangdong 518125 (CN)
(72) Inventor: ZHENG, Hanxin, Shenzhen Guangdong 518125 (CN); MO, Yiping, Shenzhen Guangdong 518125 (CN)
(74) Representative: Haley, Stephen
(86) International application number: PCT/CN2010/000500
(87) International publication number: WO 2011/026300

(57) **Abstract**

A folding joint device, which is provided on a land traveling vehicle, includes an upper segment of a connected body and a lower segment of a connected body connected by the joint. Said joint includes a fixing sleeve and a hinge sleeve (7). Said hinge sleeve is provided in the fixing sleeve. Said fixing sleeve is fixed on the lower segment of the connected body. Said hinge sleeve is fixed on the upper segment of the connected body. An opening is provided on one end of the fixing sleeve, and an eccentric fast-lock is provided on the opening to connect. Said folding joint device which can adjust the angle arbitrarily according to the demand of the user, has good clamping stability, easy operability, and can save space after folding.

## Description

### TECHNICAL FIELD

The present invention relates to a folding joint device, and more particularly, to a folding joint device which is used on a land traveling vehicle.

### BACKGROUND OF THE INVENTION

Folding bicycles have already been very popular. There are many kinds of folding joint devices which can be used to fold the front part or the rear part of the bicycle, or to extract, retract or fold the handle vertical tube, the seat tube, and so on. But some of the joints have poor stability. And usually the joint is disposed on the head tube, so the bicycle is reduced limitedly in height after being folded, and can not be folded to the minimum size. Moreover, the joint can only be adjusted to the normal working position or the normal folding angle, but can not be adjusted to and be fastened at some intermediate positions according to the requirements of the users, so it can't meet the needs of most users.

### SUMMARY OF THE INVENTION

The present invention is aimed at providing a folding joint device, which can be adjusted to a certain angle randomly according to the requirements of the users and save space greatly after a bicycle is folded with the folding joint device, the folding joint device has good clamping stability and lower cost, and is easy to manufacture and operate.

The object of the present invention is achieved by the following technical scheme: a folding joint device, which is used on a land traveling vehicle and comprises a lower segment and an upper segment of a joined body comprises a fixing jacket and a hinge shaft sleeve; wherein the hinge shaft sleeve is disposed inside the fixing jacket; the fixing jacket is to be fixed on the lower segment; the hinge shaft sleeve is to be fixed on the upper segment; the fixing jacket has an opening at one end, and the opening is provided with an eccentric fast-lock mechanism.

The fixing jacket comprises an upper cover and a base which can be locked together ; the upper cover and the base are hinged together at the other end.

The folding joint device of the present invention has a simple structure and is easy to operate. The hinge shaft sleeve is positioned below the upper end surface of the head tube, so the front part of the bicycle can stride across the head tube and be folded to a lower position, which saves space. Additionally, the outside of the hinge shaft sleeve, the base and the upper cover are provided with gear grooves so that the users can adjust the positions and angles of inclination of the handle or the seat according to their own needs. For example, when the bicycle runs uphill, runs downhill or runs in the mountainous terrain, the angle of inclination or the height of the handle can be adjusted.

### BRIEF DESCRIPTION OF THE DRAWINGS

Fig. 1 is a schematic diagram illustrating the folding joint device of the present invention, which is disposed in the front part of the bicycle;
Fig. 2 is a partial enlarged schematic diagram of the folding joint device of the present invention shown in Fig. 1;
Fig. 3 is a schematic diagram illustrating the folding joint device of the present invention, which is disposed in the front part of the bicycle and in the locked state;
Fig. 4 is a schematic diagram illustrating the folding joint device of the present invention, which is disposed at the rear part of the bicycle;
Fig. 5 is a partial enlarged schematic diagram of the folding joint device of the present invention shown in Fig. 4;
Fig. 6 is a schematic diagram illustrating the folding joint device of the present invention shown in Fig. 4, which is in the locked state;
Fig. 7 is a schematic diagram illustrating the limit ring of the folding joint device of the present invention;
Fig. 8 is a schematic diagram illustrating the integral fixing jacket of the folding joint device of the present invention.

### DETAILED DESCRIPTION OF THE PREFERRED EMBODIMENTS

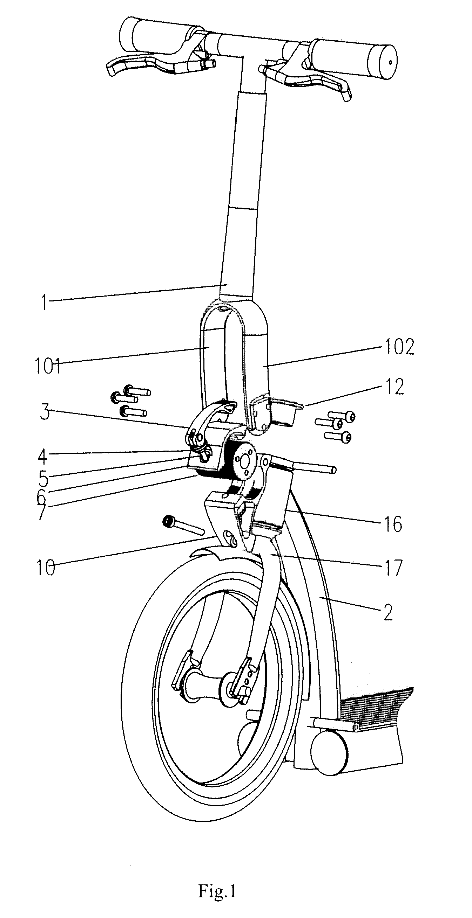

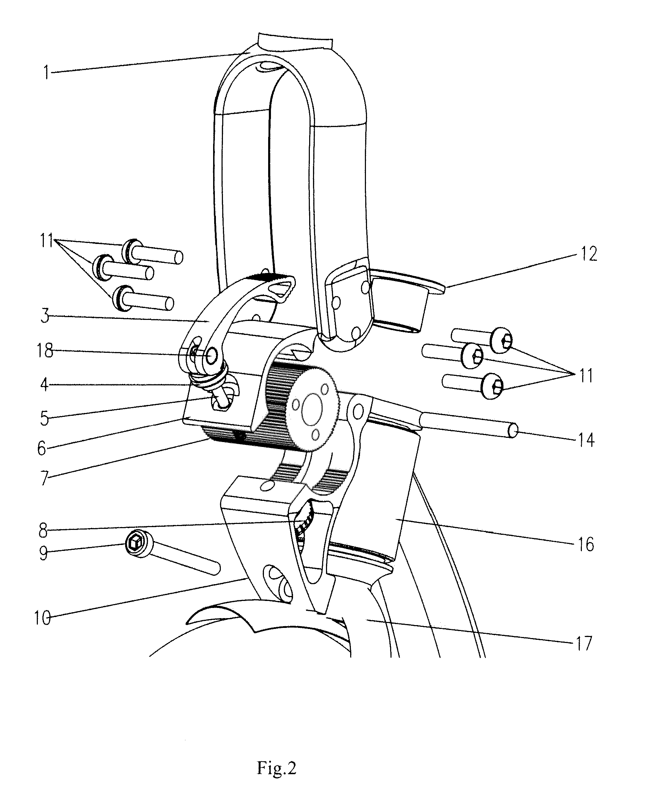

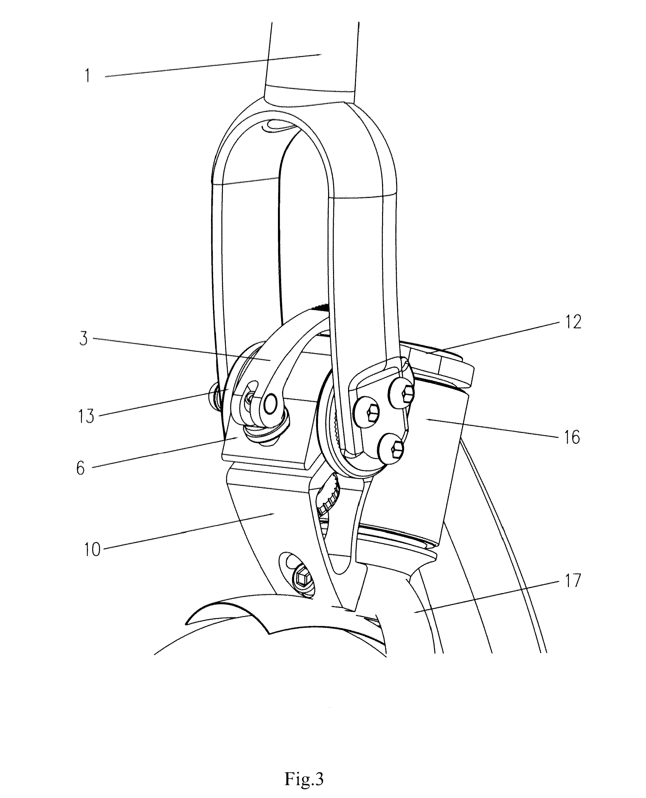

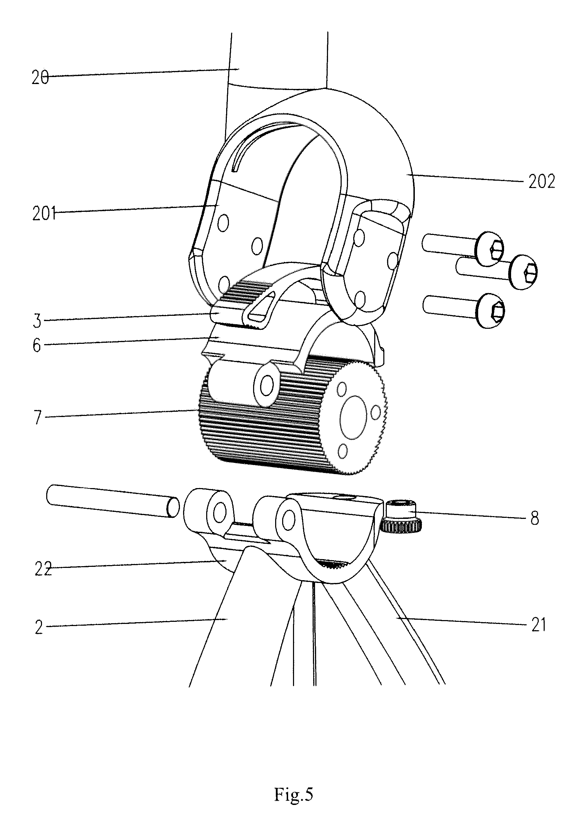

The present invention will be described in more details with reference to the accompanying Figures 1 to 8.

According to the first embodiment, as shown in Figures 1, 2 and 3, a head tube 16 is welded on a frame 2; an upper end of a front fork 17 is rotatablely disposed inside the head tube 16; the handle is connected with a vertical tube 1, and a lower end of the vertical tube 1 is connected with a folding joint device. In more detail, the lower end of the vertical tube 1 is a U-shaped member having a first arm 101 and a second arm 102. The two arms are fixed on the folding joint device respectively.

The articulated mechanism has a base 10, an upper cover 6 and a hinge shaft sleeve 7. A through hole is disposed at an underside of the base 10.The underside of the base10 is fixed on the front fork 17 with a first screw 9 passing through the through hole. An upper end of the base10 has a circular ring, which is disposed over the head tube 16 and is coaxial with the head tube 16. The circular ring is connected with the head tube by a second screw 12 passing through the circular ring. The circular ring can revolve coaxially with respect to the head tube 16. Alternatively, the base10 is fixed on a part rigidly connected with the front fork. An upper side of the base10 is formed into a first arc groove for receiving the hinge shaft sleeve 7. The hinge shaft sleeve 7 is in the shape of a column, and each side of the hinge shaft sleeve 7 has three screwed holes. The hinge shaft sleeve 7 and the U-shaped member of the vertical tube 1 are fastened together with six third screws 11. The upper cover 6 and the base 10 are hinged together at one end with a hinge shaft 14, and are connected together with an eccentric fast-lock mechanism at another end. Also, the inner side of the upper cover 6 is formed into a second arc groove. The first arc groove of the base 10 and the second arc groove of the upper cover 6 together enclose and fasten the hinge shaft sleeve 7. The radius of the first arc groove on the upper end of the base and the radius of the second arc groove on the inner side of the upper cover 6 correspond to the radius of the hinge shaft sleeve. The eccentric fast-lock mechanism comprises a handle 3, a shaft 18, a liner 4, a threaded rod 5 and a nut 8. One end of the threaded rod 5 is connected with the handle 3 by the shaft 18, the other end of the threaded rod 5 passes through a hole in the upper cover 6 and the corresponding through hole in the base 10, and then is tighten and fixed by the nut 8. The liner 4 is disposed between the upper end of the threaded rod 5 and the tail end of the handle 3 .

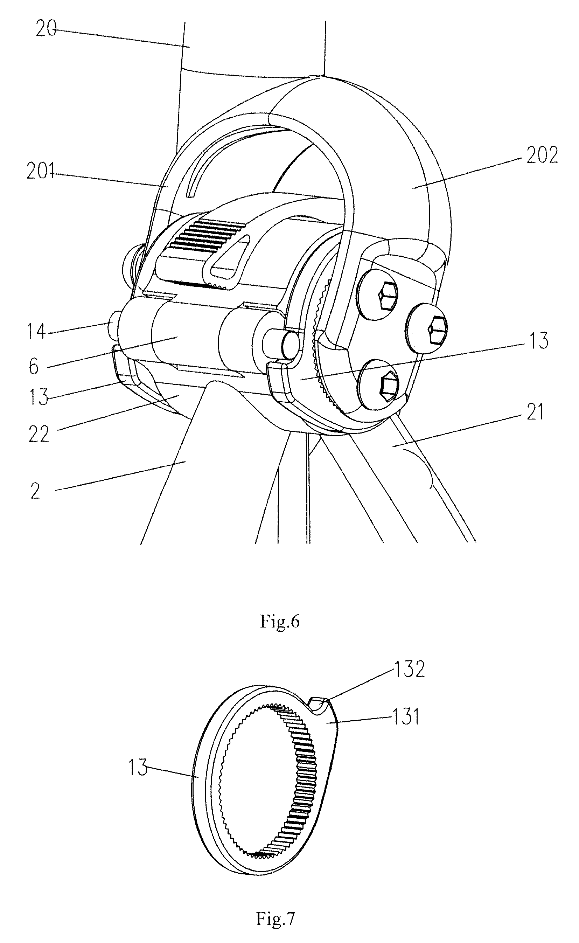

In order to prevent the rotatable handle from being thrown forward suddenly, limit rings 13 are disposed between the first arm 101 and the hinge shaft sleeve 7, and between the second arm 102 and the hinge shaft sleeve 7. As shown in Figure 7, the limit ring 13 is in the form of an annular structure, the inner diameter of which corresponds to the outer diameter of the hinge shaft sleeve 7. The limit rings 13 are sleeved on the hinge shaft sleeve 7. The periphery of the limit ring 13 has a raised head 131, and an arc groove 132 is formed on the periphery of the raised head 131 and the limit ring 13. The arc groove 132 can mate with and hook the end of the hinge shaft 14. At the interface between the arc groove 132 and the hinge shaft 14, the radius of curvature of the arc groove 132 is greater than or equal to the radius of the hinge shaft 14, which limits the handle to rotate within a certain range.

When the bicycle runs, the hinge shaft sleeve 7 is fastened between the base 10 and the upper cover 6 by the eccentric fast-lock mechanism. When the eccentric fast-lock mechanism is unlocked, the vertical tube 1 and the hinge shaft sleeve 7 can rotate relative to the base 10, so that the distance between the handle and the seat can be adjusted. When the bicycle is not in use, the handle and the vertical tube 1 can be folded to one side of the bicycle so as to save space. When the U-shaped member rotates afterwards, its height should enable it to stride across the head tube 16. In more detail, the distance from the center axis of the hinge shaft sleeve 7 to the inner bottom of the U-shaped member is greater than the distance from the center axis of the hinge shaft sleeve 7 to the end of the second screw 12, wherein the level of the center axis of the hinge shaft sleeve 7 is below the level of the upper end surface of the head tube, and the folding joint device is disposed in front of the head tube. So that, when the bicycle is folded, the height of the vertical tube 1 is below the height of the head tube 16, which further reduces the height of the whole folded bicycle and makes the bicycle easy to be stored.

In addition, the outside surface of the hinge shaft sleeve 7 may be provided with first gear grooves, and the first arc groove on the upper end of the base 10 and the second arc groove on the inner side of the upper cover 6 are both provided with corresponding second gear grooves which mesh with the first gear grooves. So that, when the base 10 and the upper cover 6 are locked together, the hinge shaft sleeve 7 will be fixed more securely, and the hinge shaft sleeve 7, the base 10 and the upper cover 6 are not easy to rotate relative to each other, which improves the clamping stability and the security. Inner surface of the limit ring 13 is provided with the third gear grooves which mesh with the first gear grooves on the outside surface of the hinge shaft sleeve 7. When the base 4 and the upper cover 6 are locked together, the hinge shaft sleeve 7 will be fixed more securely, and the hinge shaft sleeve 7, the base 10 and the upper cover 6 are not easy to rotate relative to each other, which improves the clamping stability and the security. Shims may be disposed between the hinge shaft sleeve and the fixing jacket. The shims are sheets with elasticity or with rough surfaces. In order to improve the clamping stability and the security, the shims are disposed in a part of or the whole interface between the hinge shaft sleeve and the fixing jacket.

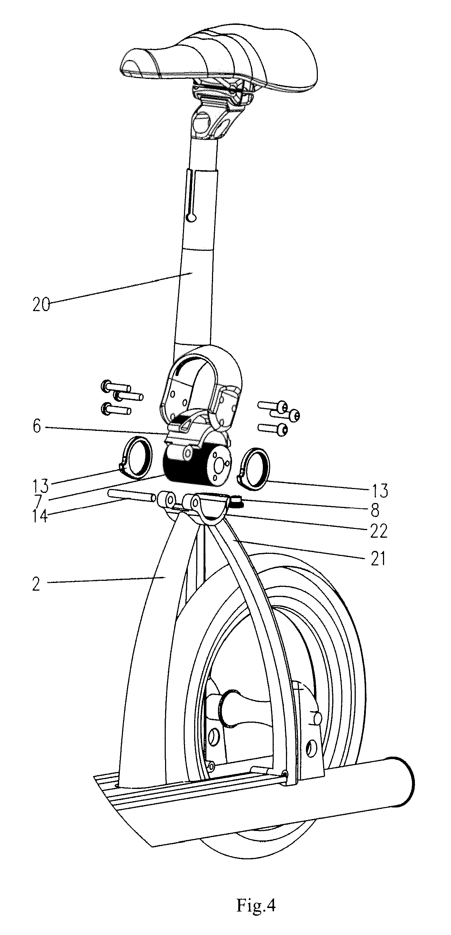

According to the second embodiment, as shown in Figures 4, 5 and 6, the folding joint device is disposed in the rear part of the bicycle to connect a seat tube 20 so that the seat tube can be rotated and folded. The folding joint device has the base 22, the upper cover 6 and the hinge shaft sleeve 7. The base 22 of the folding joint device is welded at a junction between the frame 2 and a rear fork 21. A fourth arc groove is formed on the upper end of the base 22. The base 22 and the upper cover 6 are hinged together with the hinge shaft 14 at one end, and are connected together by an eccentric fast-lock mechanism at the other end. Structure of the eccentric fast-lock mechanism and the connection mode are the same as those in the first embodiment and will not be described here in detail. The lower end of the seat tube 20 is a U-shaped fork having a third arm 201 and a fourth arm 202. The two arms are fixed on the hinge shaft sleeve 7 with bolts. The outside surface of the hinge shaft sleeve 7 may be provided with gear grooves, and the fourth arc groove on the upper end of the base 22 and the second arc groove on the inner side of the upper cover 6 both are provided with corresponding gear grooves which mesh with the gear grooves of the hinge shaft sleeve. So that, when the base 22 and the upper cover 6 are locked together, the hinge shaft sleeve 7 will be fixed more securely, and the hinge shaft sleeve 7, the base 22 and the upper cover 6 are not easy to rotate relative to each other, which improves the clamping stability and the security.

Limit rings 13 are disposed between the third arm 201 and the hinge shaft sleeve 7, and between the fourth arm 202 and the hinge shaft sleeve 7. The structure of the limit ring 13 is the same as that in the first embodiment. The arc groove 132 matches with the ends of the hinge shaft 14, so that, when the seat tube turns to a certain position, the arc groove 132 of the limit ring 13 will hook the hinge shaft 14 to ensure the fastness of the seat tube 20. Namely, even if the seat tube 20 is imposed a backward moment of force by a cyclist, it will not incline afterwards excessively, which avoids danger to the cyclist by failure of clamping and fixing. The safety of this kind of limit device is extremely high.

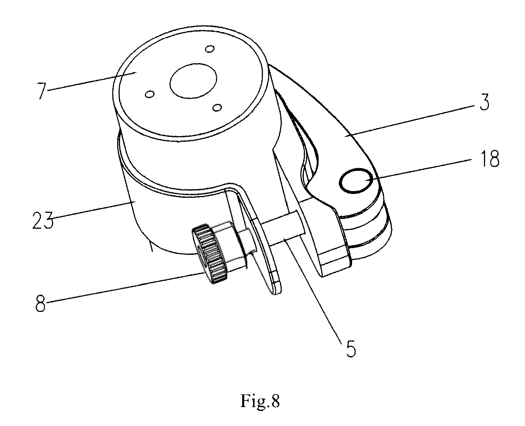

Alternatively, as shown in Figure 8, in the first embodiment or in the second embodiment, the base 10 and the upper cover 6 may be integrated and constitute an integral fixing jacket 23. The integral fixing jacket 23 has a gap at one end, the gap can be connected with the eccentric fast-lock mechanism, which is the same as those in the embodiments above. The difference is that the integral fixing jacket is integrated at the other end, and needs not to be connected with the hinge shaft, which is not the same as that in the first embodiment where the base 10 and the upper cover 6 are hinged together with the hinge shaft. The integral fixing jacket 23 is fixed on the lower segment.

The folding joint device of the present invention perfectly suits to be employed at the front vertical tube or the rear seat tube of bicycles, tricycles, scooters, motor scooters and so on.

The preferred embodiments described above are not restricted. It will be understood by those skilled in the art that various modifications, identical replacements and improvements may be made therein without departing from the scope of the invention.

## Claims

1. A folding joint device, which is used on a land traveling vehicle and comprises a lower segment and an upper segment of a joined body, comprising a fixing jacket and a hinge shaft sleeve; wherein the hinge shaft sleeve is disposed inside the fixing jacket; the fixing jacket is to be fixed on the lower segment; the hinge shaft sleeve is to be fixed on the upper segment; the fixing jacket has an opening at one end, and the opening is provided with an eccentric fast-lock mechanism.

2. The folding joint device according to claim 1, wherein, the fixing jacket comprises an upper cover and a base which can be locked together; and the upper cover and the base are hinged together at the other end.

3. The folding joint device according to claim 1, wherein, the eccentric fast-lock mechanism comprises a handle, a shaft, a threaded rod and a nut; one end of the threaded rod is connected with the handle by the shaft, the other end of the threaded rod passes through a hole in the upper cover and a corresponding through hole in the base, and then is tighten and fixed by the nut.

4. The folding joint device according to claim 1 or 2, wherein, the hinge shaft sleeve has a shape of a column; and an inner side of the fixing jacket is formed into arc grooves; and a radius of the arc grooves correspond to a radius of the hinge shaft sleeve.

5. The folding joint device according to claim 4, wherein, an outside surface of the hinge shaft sleeve is provided with first gear grooves; and the inner side of the fixing jacket is provided with second gear grooves which mesh with the first gear grooves of the hinge shaft sleeve.

6. The folding joint device according to claim 4, wherein, shims are disposed between the hinge shaft sleeve and the fixing jacket.

7. The folding joint device according to claim 1 or 2, wherein, the upper segment is provided with a U-shaped member; two arms of the U-shaped member are fixed on two sides of the hinge shaft sleeve respectively.

8. The folding joint device according to claim 1 or 2, wherein, the upper segment is a vertical tube; the lower segment of the joined body is a front fork or a part rigidly connected with the front fork; an underside of the fixing jacket is fixed on the lower segment; an upper side of the fixing jacket is connected with a head tube and can revolve coaxially with respect to the head tube; and the head tube is welded on a frame.

9. The folding joint device according to claim 8, wherein, the folding joint device is disposed in front of the head tube; and a level of a center axis of the hinge shaft sleeve is below a level of an upper end surface of the head tube.

10. The folding joint device according to claim 8, wherein, a distance from the center axis of the hinge shaft sleeve to an inner bottom of the U-shaped member is greater than a distance from the center axis of the hinge shaft sleeve to the upper end of the head tube.

11. The folding joint device according to claim 1 or 2, wherein, the upper segment is a seat tube; and the lower segment is a frame and a rear fork.

12. The folding joint device according to claim 1 or 2, wherein, limit rings are disposed on the hinge shaft sleeve between the fixing jacket and the upper segment of the joined body; a periphery of the limit ring is provided with a raised head and an arc groove; the arc groove of the limit ring hooks each end of a protruding part of the fixing jacket, and the protruding part is a cross rod which is welded on the fixing jacket and extends from two sides of the fixing jacket, or the arc groove of the limit ring hooks a hinge shaft protruding axially.
